(19) Europäisches Patentamt / European Patent Office / Office européen des brevets

(11) **EP 2 944 662 B1**

(12) **EUROPEAN PATENT SPECIFICATION**

(45) Date of publication and mention
of the grant of the patent:
**18.07.2018 Bulletin 2018/29**

(51) Int Cl.:
**C08G 18/76** *(2006.01)*    **C08G 18/42** *(2006.01)*
**C09J 175/06** *(2006.01)*

(21) Application number: **14001740.1**

(22) Date of filing: **16.05.2014**

(54) **Thermoplastic polyurethane hot melt adhesive**

Thermoplastische Polyurethanheißschmelzhaftmittel

Adhésif thermofusible de polyuréthane thermoplastique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.11.2015 Bulletin 2015/47**

(73) Proprietor: **Henkel AG & Co. KGaA
40589 Düsseldorf (DE)**

(72) Inventors:
• **Slark, Andrew
Wokingham, Berkshire SL25DS (GB)**
• **Kasper, Dirk
40597 Düsseldorf (DE)**
• **Klue, Luan
Kingsclere, Basingstoke RG205SP (GB)**
• **Sethi, Sheetal
Reading, Berkshire RG46RL (GB)**

(56) References cited:
**EP-A1- 1 043 438     WO-A1-95/13307
JP-A- H0 797 560     US-A- 4 166 873
US-A- 4 579 930**

**Description**

The invention relates to hot melt adhesives composition comprising a mixture of at least two different thermoplastic polyurethane copolymers (A) and (B). The thermoplastic polyurethane copolymer (A) comprises a reaction product of at least one polyester polyol and at least one polyisocyanate. (A) has a number average molecular weight ($M_n$) of at least 25,000 g/mol. The thermoplastic polyurethane copolymer (B) comprises a reaction product of at least one polyester polyol and at least one polyisocyanate. (B) has a number average molecular weight ($M_n$) of less than 25,000 g/mol. The hot melt adhesive composition has a melt viscosity of 1,000 to 100,000 mPas at 160 °C. Furthermore, the invention relates to a specific method of applying the adhesive according to the invention and specific uses thereof.

The most common polyurethane hot melt adhesives are reactive, contain isocyanate functional groups and are moisture cured. Cure takes place typically over at least several days. The materials produce versatile adhesion to a variety of substrates and bonds are resistant to high and low temperature and high humidity. However, these polyurethane hot melt adhesives need to be protected from moisture in expensive packaging until their application, and the application equipment necessary to process these adhesives is in addition expensive. Moreover, these reactive polyurethane hot melts contain 2 to 5% of free isocyanate monomers like 4,4'-diphenyl methane diisocyanate (MDI) which is a respiratory sensitizer and may cause health issues. The free monomers can be reduced to lower levels but this process is expensive. Curing of these adhesives is variable and can be slow depending on the moisture content in substrates, the atmospheric humidity, and the moisture vapour transmission rates of the formulations and the thickness of the glue line.

It is also known to prepare non-reactive polyurethanes. In such case the polymer shall not contain reactive NCO groups, i.e. should be essentially free of NCO groups, so the material can be stored without any problems. Such thermoplastic polyurethanes are used to manufacture moulded articles, such as footwear, cables, hoses, films or machine parts. Such articles of manufacture shall be used at ambient temperature, so they shall not provide properties of an adhesive.

Adhesives based on thermoplastic polyurethane copolymers are known in the art. These thermoplastic polyurethane (TPU) hot melt adhesives comprise a polyester polyol or polyether polyol, which can be semi-crystalline, reacted with diisocyanates and frequently a chain extender. As diisocyanate usually MDI is used. The chain extender is typically a low number average molecular weight diol, e.g., 1,4-butane diol. In order to achieve good mechanical properties, the number average molecular weight of these TPU is high and in general more than 40,000 g/mol ($M_n$).

For example, prior art document WO 00/15728 A discloses a coated sheet having a heat-activatable adhesive coating of coating solids, wherein the coating solids are mainly thermoplastic polyurethane, the coating solids having a melting point of 40 to 100°C, and the coating is crystalline and has an average crystal size below 10 μm.

It is an object of the present invention to provide an improved hot melt adhesive based on TPU, which provides a low application viscosity in combination with a high level of adhesion and/or cohesion. Moreover, a further object of the present invention is the provision of a hot melt adhesive based on TPU which does not require an extruder to apply the hot melt adhesive composition. In this regard it has been surprisingly found that hot melt adhesive composition according to the present invention can be used in standard processing equipment, without the need of high heat and shear, used to process common thermoplastic hot melt adhesives such as polyolefins, rubbers, EVA, acrylics.

The objects are solved by a hot melt adhesive comprising at least two different specific thermoplastic polyurethane copolymers TPU (A) and (B) as defined in the claims

An adhesive according to the invention is a thermoplastic hot melt adhesive. It is meltable but it is essentially free of reactive functional groups which may crosslink after application. The adhesive shall consist of at least two different thermoplastic polyurethanes (TPU) and optionally further additives which will be defined in detail below.

In the present specification the terms "a" and "an" and "at least one" are the same as the term "one or more" and can be employed interchangeably.

The term "essentially free" within the context of this invention is to be interpreted as the respective compound is contained in the composition in an amount of less than 5 wt.-%, 4 wt.-%, 3 wt.-%, 2 wt.-%, 1.5 wt.-%, 1 wt.-%, 0.75 wt.-%, 0.5 wt.-%, 0.25 wt.-%, 0.1 wt.-%, based on the total weight of the composition, wherein the amounts are respectively more preferred in descending order. For example, 4 wt.-% is more preferred then 5 wt.-% and 3 wt.-% is more preferred then 4 wt.-%.

The abbreviation "TPU" is to be interpreted to mean "at least one TPU" unless explicitly stated otherwise.

In the present invention the molar ratio of the NCO groups of the polyisocyanate to the OH groups of the polyester polyol is also referred to as NCO : OH ratio.

In particular, the present invention relates to a hot melt adhesive composition comprising two thermoplastic polyurethane copolymers (A) and (B),

wherein the thermoplastic polyurethane copolymer (A) comprises a reaction product of

at least one polyester polyol; and

at least one polyisocyanate; and

has a number average molecular weight ($M_n$) of at least 25,000 g/mol;

wherein the thermoplastic polyurethane copolymer (B) comprises a reaction product of
at least one polyester polyol; and
at least one polyisocyanate; and
has a number average molecular weight ($M_n$) of less than 25,000 g/mol; and
wherein the hot melt adhesive composition has a melt viscosity of 1,000 to 100,000 mPas at 160 °C.

Furthermore, the invention relates to a method of applying a hot melt adhesive composition according to the present invention to a substrate, comprising the steps

1) melting the hot melt adhesive composition in a heated container without agitation or shear;
2) pumping the melted hot melt adhesive composition of step 1) via a gear or piston pump through a heated hose; and
3) applying the hot melt adhesive composition via a nozzle, roller or spray head onto the substrate.

Moreover, the present invention relates to the use of the hot melt adhesive composition according to the present invention in bookbinding, wood bonding, flat lamination, flexible packaging, profile wrapping, edge banding, textile lamination, low pressure molding, and shoes.

Further preferred embodiments of the invention are set out in the claims.

The thermoplastic polyurethane copolymers (A) and (B) are described in the following.

(A) has a number average molecular weight ($M_n$, measured by GPC as defined below) of at least 25,000 g/mol. In more preferred embodiments the $M_n$ is at least 30,000, 35,000, 40,000, 45,000, 50,000, 60,000, 70,000, or 80,000 g/mol. Thereby the respective embodiments are with ascending order of the amounts more preferred. That means for example 40,000 g/mol is more preferred than 35,000 g/mol and 45,000 g/mol is more preferred than 40,000 g/mol. In even more preferred embodiments the Mn is in a range of from 25,000 to 60,000 g/mol, in most preferred embodiments the range is 30,000 to 50,000 g/mol.

(A) preferably has an NCO:OH ratio of more than 0.90:1. In preferred embodiments the NCO:OH ratio is in a range having any combination of a lower limit selected from more than 0.90:1, 0.91:1, 0.92:1, 0.93:1, 0.94:1, 0.95:1, 0.96:1, 0.97:1, 0.98:1, or 0.99:1 and an upper limit of 1.00:1, 0.99:1, 0.98:1, 0.97:1, 0.96:1, 0.95:1, 0.94:1, 0.93:1, 0.92:1, 0.91:1, In a more preferred embodiment the NCO:OH ratio is in the range of 0.93:1 to 0.97:1.

(B) has preferably an NCO:OH ratio of less than 0.90:1. In preferred embodiments the NCO:OH ratio is in a range having any combination of an upper limit selected from less than 0.9:1, 0.85:1, 0.8:1, 0.75:1 or 0.7:1 and having a lower limit selected from 0.65:1, 0.7:1, 0.75:1, 0.8:1, 0.85:1. In more preferred embodiments the NCO:OH ratio is in the range of 0.7:1 to 0.9:1. In most preferred embodiments the NCO:OH ratio is 0.75:1 to 0.85:1.

(B) has a number average molecular weight ($M_n$, measured by GPC as defined below) of less than 25,000 g/mol. In more preferred embodiments the $M_n$ is less than 22,500, 20,000, 15,000, 10,000, 7,500, or 5,000 g/mol. Thereby the respective embodiments are with descending order of the amounts more preferred. That means for example 20,000 g/mol is more preferred than 22,500 g/mol and 22,500 g/mol is more preferred than 25,000 g/mol. In even more preferred embodiments the $M_n$ is in a range of from 20,000 to 5,000 g/mol, in most preferred embodiments the range is 15,000 to 7,500 g/mol.

TPUs (A) and/or (B) are preferably thermally stable. The thermal stability is defined to be a viscosity change of less than ± 10 % compared to the initial viscosity of the respective TPU after 6 hours at 160°C. The viscosity is measured as set out in the example section below.

Main components of the TPUs (A) and (B) according to the invention are polyester polyols. These shall include crystalline or semi-crystalline polyester polyols which are in the present invention referred to as semi-crystalline polyester polyols, and non-crystalline polyester polyols which include liquid polyester polyols and solid amorphous polyester polyols. Polyester polyols are well known to the skilled person and they can be obtained by a reaction of polycarboxylic acids and polyols. Thereby it is possible to include small amounts of three-functional alcohols or carboxylic acids in the reactions in order to incorporate branching without crosslinking. To obtain linear polyester polyols it is preferred that most of the monomers are difunctional components. The properties of the polyester polyols can be adjusted according to the type of comonomers. It is well known to the skilled person how to prepare semi-crystalline and non-crystalline polyester polyols. The polyester shall contain at least two hydroxyl groups. The properties of the polyester can be designed by the different components. For example, a single linear aliphatic diol and a linear aliphatic diacid will tend to provide semi-crystalline polymers. Increasing melting point can be obtained by increasing the length of the carbon chain in the diacid or by using symmetrical aromatic diacids. More amorphous materials can be obtained by increasing the number of comonomers or incorporating branched aliphatic comonomers. The polyester polyols can comprise further functional groups like NH or COOH which can also react with the one or more isocyanates. Suitable monomers for the preparation are described below.

The components of the TPUs (A) and (B) are selected in a way, so that preferably linear polyurethanes are obtained. In order to obtain a TPU which is essentially free of NCO groups, i.e. preferred embodiments of (B), the amount of the NCO groups (equivalents) in the one or more isocyanate is selected to be smaller than the amount (equivalents) of reactive OH, NH, COOH groups of the polyester polyols.

Suitable polyester for TPUs (A) and (B) shall contain at least two hydroxyl groups. The properties of the polyester can be designed by the different components. For example, a single linear aliphatic diol and a linear aliphatic diacid will tend to provide semi-crystalline polymers. Increasing melting point can be obtained by increasing the length of the carbon chain in the diacid or by using symmetrical aromatic diacids. More amorphous materials can be obtained by increasing the number of comonomers or incorporating branched aliphatic comonomers.

Suitable polyester polyols for TPUs (A) and (B) are formed through the condensation of one or more polyhydric alcohols having preferably from 2 to 30 carbon atoms with one or more polycarboxylic acids having preferably from 2 to 14 carbon atoms. Suitable polyols include alkylene diols, in particular linear alcohols with 2 to 30 C atoms, which exhibit up to four preferably two OH groups; glycol ethers; and alicyclic polyols. Examples of suitable polyhydric alcohols include ethylene glycol, propylene glycol such as 1,2-propylene glycol and 1,3-propylene glycol, glycerol, pentaerythritol, trimethylolpropane, butanediol, pentanediol, hexanediol, dodecanediol, octanediol, chloropentanediol, glycerol monoallyl ether, glycerol monoethyl ether, diethylene glycol, 2-ethylhexanediol, 1,4-cyclohexanediol, 1,2,6-hexanetriol, 1,3,5-hexanetriol, 1,3-bis-(2-hydroxyethoxy)propane. The polyols can be used separately or in mixture. They preferably have a molecular weight from 100 to 750 g/mol, their functionality is preferably 2 or 3.

Examples of polycarboxylic acids include ortho-phthalic acid, iso-phthalic acid, terephthalic acid, tetrachlorophthalic acid, maleic acid, dodecylmaleic acid, octadecenylmaleic acid, fumaric acid, aconitic acid, trimellitic acid, tricarballylic acid, 3,3'-thiodipropionic acid, succinic acid, adipic acid, suberic acid, azelaic acid, malonic acid, glutaric acid, pimelic acid, sebacic acid, cyclohexane-1,2-dicarboxylic acid, 1,4-cyclohexadiene-1,2-dicarboxylic acid, 3-methyl-3,5-cyclohexadiene-1,2-dicarboxylic acid and the corresponding acid anhydrides, acid chlorides and acid esters such as phthalic anhydride, phthaloyl chloride and the dimethyl ester of phthalic acid. Dimer fatty acids can also be used, where they are the dimerization product of mono- or polyunsaturated acids and/or esters thereof. Preferred dimer fatty acids are dimers of C10 to C30, more preferably C14 to C22 carbon acids. Suitable dimer fatty acids include the dimerization products of oleic acid, linoleic acid, linolenic acid, palmitoleic acid and elaidic acid. The dimerization products of the unsaturated fatty acid mixtures obtained in the hydrolysis of natural fats and oils, e.g., sunflower oil, soybean oil, olive oil, rapeseed oil, cottonseed oil and tall oil may also be used. In addition to the dimer fatty acids, dimerization usually results in varying amounts of oligomeric fatty acids and residues of monomeric fatty acids. Suitable dimer fatty acids have a dimer acid content greater than 75 wt.% based on the total weight of the dimer fatty acid starting material.

Further suitable polyester polyols for TPUs (A) and (B) are polycarbonate polyols. Polycarbonate polyols can be received for example by the reaction from diols, like propylene glycol, butanediol-1,4 or hexenediol-1,6, diethyleneglycol, triethyleneglycol or mixtures from two or more from it with diarylcarbonates. Polyesters on the basis of ε- caprolactone are also suitable. Also polyester polyols are suitable, which contain one or more urethane groups in the polymer chain.

Other useful polyester polyols for TPUs (A) and (B) include, e.g., polyols derived from oleochemicals, and the complete ring opening of epoxidized triglycerides of an at least partially olefinic unsaturated fatty acid-containing fat mixture and at least one alcohol containing from 1 carbon atom to 12 carbon atoms, followed by partial transesterification of the triglyceride derivatives to form alkyl ester polyols having from 1 carbon atom to 12 carbon atoms in the alkyl chain.

Commercially available polyester polyols which may be used in the practice of the invention for TPUs (A) and (B) include semi-crystalline or non-crystalline polyesters. For this invention it shall be understood, that the term polyester polyol shall include also polyester, which comprise at the end of the polymer chain amino groups or carboxylic groups. But the preferred group of such polyester are polyester diols.

Preferred polycarboxylic acids are the aliphatic and cycloaliphatic dicarboxylic acids containing no more than 14 carbon atoms and the aromatic dicarboxylic acids containing no more than 14 atoms. In more preferred embodiments the at least one polyester polyol of TPU (A) and/or (B) comprises an ortho-phthalate. It should be understood that "comprising ortho-phthalate" in this context is to be interpreted that the term "ortho-phthalate" also includes derivatives thereof, i.e. the polyester polyol is obtained by reacting a mixture including, at least one of ortho-phthalate, phthalic anhydride, or derivatives thereof or combinations thereof. In even more preferred embodiments, the ortho-phthalate is comprised in the polyester polyol of TPU (A) and/or (B), further more preferred in the polyester polyol of TPU (A) and/or (B) according to item b) (described below). In most preferred embodiments the ortho-phthalate is comprised in the polyester polyol of TPU (A) and/or (B) according to item c) (described below).

As suitable monomeric isocyanates to be used in the synthesis for TPUs (A) and (B) preferably isocyanates which contain two or three NCO groups are selected. They include well-known aliphatic, cyclo-aliphatic or aromatic monomeric diisocyanates. Preferably isocyanates are selected from such with a molecular weight from 160 g/mol to 500 g/mol, for example aromatic polyisocyanates as 4,4'-diphenylmethanediisocyanate (MDI), 2,2'-diphenylmethane diisocyanate, diphenyl methane 2,4'-diisocyanate, 1,3-phenylenediisocyanate, 1,4-phenylenediisocyanate, naphthalene-1,5-diisocyanate (NDI), toluenediisocyanate (TDI), tetramethyl xylylene diisocyanate, toluene diisocyanate, naphthalene, di- and tetraalkyl diphenylmethane diisocyanate, 4,4' -dibenzyl diisocyanate, and combinations thereof.

Aliphatic isocyanates such as dodecane diisocyanate, dimer fatty acid diisocyanate, 4,4'-dibenzyldiisocyanate, 1,6-diisocyanato-2,2,4-trimethylhexane, butane-1,4-diisocyanate, hexane-1,6 diisocyanate (HDI), tetramethoxybutane-1,4-diisocyanate, dicyclohexylmethanediisocyanate, 1,12-diisocyanato-dodecane, cyclic diisocyanates such as 4,4-dicyclohexylmethanediisocyanate, 1,3-cyclohexane or 1,4-cyclohaxene diisocyanate, 1-methyl-2,4-diisocyanato-cyclohexane, 1-isocyanatomethyl-3-isocyanato-1,5,5-trimethylcyclohexane (isophorone diisocyanate, IPDI), hydrogenated or partly hydrogenated MDI ([H]12MDI (hydrogenated) or [H]6MDI (partly hydrogenated)), xylylenediisocyanate (XDI), tetramethyl-xylylenediisocyanate (TMXDI), di- and tetraalkylenediphenylmethane-diisocyanate can also be used.

Preferably diisocyanates with two NCO groups of different reactivity are selected from the group of the aromatic, aliphatic or cyclo-aliphatic diisocyanates. It is also possible to include at least partly oligomeric diisocyanates such as allophanate, carbodiimide, biuret condensation products from diisocyanates, e.g., from HDI, MDI, IPDI or other isocyanates. Mixtures of aliphatic or aromatic isocyanates can be used. More preferably aromatic diisocyanates are used.

The at least one polyester polyol which is comprised in the TPU (A) and/or (B) according to the invention can preferably comprise

a) at least one semi-crystalline polyester polyol having a melting point ($T_m$) of from 40 to 150 °C, preferably 60 to 140 °C, more preferably 80 to 140°C (as determined by DSC as defined below), and

b) at least one non-crystalline polyester polyol.

The at least one semi-crystalline polyester polyol which is comprised in the TPU (A) and/or (B) according to item a) has preferably a number average molecular weight ($M_n$, measured by GPC as defined below) of more than 750 g/mol. In more preferred embodiments the $M_n$ is in a range having any combination of a lower limit selected from more than 750, 1,000, 2,000, 3,000, 4,000, 5,000, 6,000, 7,000, 8,000, 9,000 and 9,500 g/mol and an upper limit selected from 10,000, 9,000, 8,000, 7,000, 6,000, 5,000, 4,500, 4,000, 3,500, 3,000, 2,500, 2,000, and 1,000 g/mol. In even more preferred embodiments the range is 1,000 to 7,000 g/mol. In most preferred embodiments the range is 1,000 to 5,000 g/mol. The composition of this polyester polyol can be selected from the acid and diol monomers as listed above, which form a crystalline polyester. Preferably diol components are used including aliphatic diols, such as 1,4-butane diol and 1,6-hexane diol.

The hot melt adhesive composition contains in preferred embodiments the polyester polyol of TPU (A) and/or (B) according to item a) from 5 to 50 wt.-%, based on the total weight of the respective TPU. In more preferred embodiments the polyester polyol according to item a) is contained from 10 to 40 wt.-% and in most preferred embodiments from 15 to 30 wt.-%.

The hot melt adhesive composition contains in preferred embodiments the polyester polyol of TPU (A) and/or (B) according to item b) from 10 to 90 wt.-%, based on the total weight of the respective TPU. In more preferred embodiments the polyester polyol according to item b) is contained from 20 to 80 wt.-% and in most preferred embodiments from 30 to 60 wt.-%.

The non-crystalline polyester polyols have preferably a glass transition temperature ($T_g$) from 50 to -70 °C, more preferably from 30 to - 60 °C, most preferably from 20 to -50 °C. The non-crystalline polyester polyols can preferably be liquid polyester polyols, which preferably have a viscosity of 500 to 50,000 mPas at room temperature (about 25°C).

The at least one non-crystalline polyester polyol of TPU (A) and/or (B) according to item b) preferably comprises

c) a non-crystalline polyester polyol having a number average molecular weight ($M_n$) of less than 750 g/mol; and

d) a non-crystalline polyester polyol having a number average molecular weight ($M_n$) of at least 750 g/mol.

The at least one non-crystalline polyester polyol of TPU (A) and/or (B) according to item c) has preferably a number average molecular weight ($M_n$, measured by GPC as defined below) of less than 750 g/mol. In more preferred embodiments the $M_n$ is in a range having any combination of a lower limit selected from 200, 300, 400, 500, 600, and 700 g/mol and an upper limit selected from 740, 700, 600, 500, 450, 400, 350, 300, and 250 g/mol. In more preferred embodiments the range is 700 to 250 g/mol. In most preferred embodiments the range is 600 to 300 g/mol. The composition of this polyester polyol can be selected from the acid and diol monomers as listed above, which form a non-crystalline polyester. Preferably employed diol components are ethylene glycol, diethylene glycol, propylene glycol and neopentyl glycol.

The at least one non-crystalline polyester polyol of TPU (A) and/or (B) according to item d) has preferably a number average molecular weight ($M_n$, measured by GPC as defined below) of more than 750 g/mol. In more preferred embodiments the $M_n$ is in a range having any combination of a lower limit selected from 760, 1,000, 2,000, 3,000, 4,000, 5,000, 6,000, 7,000, 8,000, 9,000, 9,500 and 9,750 g/mol and an upper limit selected from 10,000, 9,000, 8,000, 7,000, 6,000, 5,000, 4,500, 4,000, 3,500, 3,000, 2,500, 2,000, and 1,000 g/mol. In more preferred embodiments the range is 1,000 to 7,000 g/mol. In most preferred embodiments the range is 1,000 to 5,000 g/mol. The composition of this polyester polyol can be selected from the acid and diol monomers as listed above, which form a non-crystalline polyester. Preferably diol components are used including ethylene glycol, diethylene glycol, propylene glycol and neopentyl glycol.

The hot melt adhesive composition contains in preferred embodiments the polyester polyol of TPU (A) and/or (B) according to item c) from 5 to 50 wt.-%, based on the total weight of the TPU. In more preferred embodiments the polyester polyol according to item c) is contained from 10 to 40 wt.-% and in most preferred embodiments from 15 to 30 wt.-%.

The hot melt adhesive composition contains in preferred embodiments the polyester polyol of TPU (A) and/or (B) according to item d) from 10 to 60 wt.-%, based on the total weight of the respective TPU. In more preferred embodiments the polyester polyol according to item d) is contained from 20 to 50 wt.-% and in most preferred embodiments from 25 to 50 wt.-%.

In preferred embodiments the hot melt adhesive composition according to the invention comprises TPU (A) and/or (B) comprising 10 to 30 wt.-% of compound a); 10 to 40 wt.-% of compound c); 10 to 40 wt.-% of compound d); and 10 to 25 wt.-% of the at least one polyisocyanate, based on the total weight of the respective TPU.

The TPUs (A) and/or (B) contain in preferred embodiments the isocyanate from 5 to 40 wt.-%, based on the total weight of the respective TPU (A) or (B). In more preferred embodiments isocyanate is contained from 10 to 30 wt.-% and in most preferred embodiments from 10 to 25 wt.-%.

The hot melt adhesive composition according to the present invention preferably comprises of (A) to (B) in a weight ratio of 5:95 to 95:5. More preferably 15:85 to 85:15, most preferably 25:75 to75:25.

The TPUs (A) and (B) according to the present invention can optionally comprise a chain extender. A chain extender according to the invention is a short chain organic molecule with a specific, single defined molecular weight, having a molecular weight of less than 250 g/mol and are well known to the skilled person. Exemplarily compounds are for example disclosed in Appendix 1 page 448 of "The Polyurethanes Handbook", editors David Randall and Steve Lee, John Wiley and Sons 2002. Exemplarily compounds are alkane diols, e.g., 1,4-butane diol, 1,6-hexane diol, 1,12-dodecane diol or similar diols, which can be substituted with alkyl, cycloalkyl, phenyl or ether groups. These chain extenders are not oligomeric or polymeric. In a further preferred embodiment, the TPU (A) and/or (B) is essentially free of chain extender.

The TPU (A) and/or (B) can further optionally comprise a polyether polyol such as poly(ethylene glycol), poly(propylene glycol) or poly(tetramethylene glycol). Polyether polyols are known to the skilled person and exemplarily compounds are disclosed for example in "The Polyurethanes Handbook", Chapter 6, editors David Randall and Steve Lee, John Wiley and Sons 2002.

In a further preferred embodiment, the TPU (A) and/or (B) is essentially free of polyether polyol. Moreover, in a preferred embodiment, the TPU (A) and/or (B) is essentially free of polyether polyol and chain extender.

The manufacture of the TPUs (A) and (B) is well known in the art can be performed in any reaction vessel which can be heated. In a typical process the polyol components are mixed together as a melt with the resulting composition is optionally dried and a vacuum is optionally applied until the moisture content is below 250 ppm. Subsequently the isocyanates are added to the polyol mixture and this mixture is reacted. The man skilled in the art knows, how to determine the temperature and time to complete the reaction. The TPU can be made in solvents but this is not preferred because the solvent needs to be removed before using the TPU as a hot melt.

The hot melt adhesive according to the invention shall contain at least the two different TPUs (A) and (B) as disclosed above. An adhesive composition according to the invention preferably comprises of 50 to 99.9 wt-% of the total weight of (A) and (B) according to the invention. More preferably the composition comprises 60 to 95 wt.-% of these TPUs, most preferably 75 to 90 wt.-%.

It may contain other additives which are known in the art. The term "additive" includes dyes, fillers (e.g., silicates, talcum, calcium carbonates, clays or carbon black), thixotropic agents (e.g., bentones, pyrogenic silicic acids, urea derivatives, fibrillated or pulp short fibers), color pastes and/or pigments, conductivity additives (e.g., conductivity carbon blacks or lithium perchlorate), plasticizers, tackifiers, other thermoplastic polymers, which are different from the TPUs (A) and (B) according to the invention, stabilizers, adhesion promoters, rheological additives, waxes and any combination thereof.

The hot melt adhesive composition according to the present invention preferably comprises 0.1 to 50 wt.-% of additives, based on the total weight of the composition. In more preferred embodiments 5 to 40 wt.-%, most preferably 10 to 25 wt.-%, are contained. In even more preferred embodiments the additives are selected from stabilizers, adhesion promoters, plasticizers, tackifiers, thermoplastic polymers, which are different from (A) and (B), and combinations thereof.

The hot-melt adhesive compositions according to the invention may contain tackifiers, such as, e.g., resins derived from abietic acid, abietic acid esters, other rosin esters, polyterpene resins, terpene/phenolic resins, styrenated terpenes, poly-alpha-methylstyrene, alpha-methylstyrene-phenolic or aliphatic, aromatic or aromatic/ aliphatic hydrocarbon resins or coumarone/indene resins or resins derived from low molecular weight polyamides. These tackifying resins may optionally contain OH groups, to improve compatibility of the different components.

The hot melt adhesive composition according to the present invention preferably comprises 0.1 to 50 wt.-% of at least one tackifier, based on the total weight of the composition. In more preferred embodiments 5 to 40 wt.-%, most preferably 10 to 25 wt.-%, are contained.

The hot-melt adhesive compositions according to the invention may contain other thermoplastic polymers, which are different from the TPUs (A) and (B) according to the present invention. These include but are not limited to EVA, rubber type polymers, styrene copolymers, polyester copolymers, polycarbonates, polyamides, acrylics and thermoplastic polyurethanes.

The hot melt adhesive composition according to the present invention preferably comprises 0.1 to 50 wt.-% of at least one other thermoplastic polymer, which is different from the TPU as defined above, based on the total weight of the composition. In more preferred embodiments 5 to 40 wt.-%, most preferably 10 to 25 wt.-%, are contained.

The hot melt adhesive composition according to the present invention preferably comprises 0.1 to 50 wt.-% of at least one filler, based on the total weight of the composition. In more preferred embodiments 5 to 40 wt.-%, most preferably 10 to 25 wt.-%, are contained.

The hot-melt adhesive compositions according to the invention may contain plasticizers, provided that these plasticizers do not interfere with the hot melt capability of the adhesive - such as phthalates, benzoates, sucrose esters and sulphonamides. By way of example there may be mentioned the liquid phthalate plasticizers, plasticizers based on aromatic esters, such as, e.g., esters of benzoic acid, or also solid plasticizers such as dicyclohexyl phthalate, cyclohexane dimethanol dibenzoate. Also suitable are other plasticizers such as sucrose acetate isobutyrate, ortho-/para-toluene sulphonamide or N-ethyl-ortho-toluene sulphonamide.

The hot melt adhesive composition according to the present invention preferably comprises 0.1 to 50 wt.-% of plasticizers, based on the total weight of the composition. In more preferred embodiments 5 to 40 wt.-%, most preferably 10 to 25 wt.-% are contained.

As stabilizers different components can be used such as antioxidants, UV stabilizers, hydrolysis stabilizers. Examples for these components are sterically hindered phenols of high molecular weight, sulphur-containing and phosphorus-containing phenols or amines. This include sterically hindered phenols, polyfunctional phenols, thioether, substituted benzotriazoles, hindered benzophenone and/or sterically hindered amines. Examples of hydrolysis stabilizers include oligomeric and/or polymeric aliphatic or aromatic carbodiimides. Such components are commercially available and known to the skilled person.

As adhesion promoters, preferably organofunctional silanes can be used, either in monomeric, oligomeric or polymeric form.

The hot melt adhesive composition according to the present invention preferably comprises 0.1 to 10 wt.-% of a compound selected from stabilizer and adhesion promoters or a combination thereof, based on the total weight of the composition. In more preferred embodiments 0.2 to 5 wt.-%, most preferably 0.5 to 3 wt.-% are contained.

In a preferred embodiment the hot melt adhesive composition according to the invention comprises, based on the total weight of the composition:

    50 to 93.5 wt.-% of the two thermoplastic polyurethane copolymers (A) and (B);
    0.5 to 5 wt.-% of at least one stabilizer;
    1 to 20 wt.-% of at least one plasticizer;
    5 to 45 wt.-% of at least one tackifier;

up to 43.5 wt.-% of at least one thermoplastic polymer, which is different from (A) and (B).

The adhesive composition shall have a viscosity of 1,000 to 100,000 mPas at a temperature of 160 °C (measured as defined below). Preferably the adhesive composition has a viscosity of 2,000 to 70,000 mPas, more preferably 3,000 to 50,000 mPas.

The manufacture of the adhesive composition can be performed as known in the art. The TPUs (A) and (B) according to the invention are manufactured and thereafter are blended with the different components and additives. This can be done in any known device, e.g., batch reactor, extruder, mixer, kneader or similar machines. It is also possible for some additives to be added to the polyester polyol before reaction with the isocyanate, provided that functional materials on the additives do not interfere with the reaction between polyol and isocyanate.

The adhesive according to the invention is a thermoplastic non-reactive hot melt and the TPU is preferably essentially free of unreacted and monomeric isocyanates. So the risk of using hazardous adhesives is reduced. Upon cooling the adhesive layer will form the cohesive and adhesive forces. As no chemical crosslinking is required to develop the full adhesive bond, this improves the ease of processing of products bonded with such hot melt adhesive.

The hot melt adhesive composition according to the present invention can be applied to a substrate in any know method for common TPU.

Additionally, the hot melt adhesive composition according to the present invention can be applied to a substrate with a method comprising the steps

1) melting the hot melt adhesive composition in a heated container without agitation or shear;
2) pumping the melted hot melt adhesive composition of step 1) via a gear or piston pump through a heated hose; and
3) applying the hot melt adhesive composition via a nozzle, roller or spray head onto the substrate.

The melting temperature in step 1) is preferably below 160°C, more preferably below 150°C.

The adhesive of the present invention can be used in all areas in which common hot melt adhesives are applied. Due to its properties the adhesive of the present invention is particularly useful in the bookbinding industry, wood bonding, flat lamination, flexible packaging, profile wrapping, edge banding, textile lamination, low pressure molding, and shoes.

Example section

The following measurement methods are employed in the present invention.

Melting point and Tg

This was determined using a micro-balance capable of measuring to $\pm0.01$mg and a Mettler Toledo TA Instruments Q100/Q1000 DSC unit. The DSC was calibrated using an Indium standard. 10 to 15 mg of sample was weighed into an aluminum DSC pan and the lid fixed securely. The temperature of the DSC chamber was set at 40°C prior to use. The sample pan and reference pan (blank) were placed into the DSC cell chamber. The temperature was reduced to -50°C at a cooling rate of 15°C per minute. The temperature was held at -50°C and then increased to 150°C at a heating rate of 5°C per minute. The Tg was obtained from an inflection in the heat flow whereas Tm was obtained from a peak in the heat flow.

Molecular weight determination

The respective compounds/compositions were analysed for molecular weight and molar mass distribution by Gel Permeation Chromatography (GPC) under the same chromatographic condition. Test samples were dissolved in N,N-dimethylacetamide and each of the prepared sample solutions was filtered through a 0.20 $\mu$m syringe filter into analysis vial. The prepared sample solutions were analysed by liquid chromatography using a GPC separation technique using Styragel columns with N,N-dimethylacetamide/LiCl elution and refractive index detection at 80 °C. The number average molecular weight ($M_n$) and weight average molecular weight ($M_w$) that were determined for the tested substances are based on an external calibration that was carried out with polystyrene standards.

Melt viscosity

Melt viscosity was measured using a Brookfield Viscometer model RVDV-1+ with a Model 106 temperature controller and Thermosel unit, calibrated with viscosity standard oil. 10 to 12 g of adhesive was weighed into a disposable aluminum viscometer tube. The tube was inserted into the Viscometer and left to equilibrate for 30 minutes at 160 °C. The preheated spindle no. 27 was inserted into the adhesive and allowed to rotate for 30 minutes at 160 °C; the speed of rotation was changed according to the viscosity range measured. The initial viscosity V1 at 160°C was then measured.

Thermal stability

The sample was kept in the viscometer at a constant temperature of 160 °C ($\pm$ 1°C) for 6 hours. Then the viscosity V2 at 160°C was measured and the change in viscosity over the 6 hour period was calculated as:

$$\text{\% change} = [(V2-V1]) / V1] \times 100$$

Open time

The adhesive was preheated to 160 °C and a 150 $\mu$m thick film was applied to MDF (Medium Density Fibreboard) using a pre-heated metal coating block. The time was set at t=0. At intervals of 5 to 10 seconds, a paper strip was applied to the adhesive with finger pressure on the surface of the paper in contact with the adhesive. After a few minutes, the paper was removed. The open time limit occurs when there is no paper tear resulting from a lack of adequate wetting of the paper by the adhesive.

Adhesion

The TPU was heated for 30 minutes in an oven at 160 °C and a film was made with a metal coating block (25 mm wide, x 0.25 mm thick). The films were then conditioned at room temperature for three days. After three days, an adhesive strip (10 cm in long) was placed between two paper strips of the same dimensions. A wooden board was preheated at 180°C for 2 minutes and the samples were placed on the board in the oven at 180°C for 1 minute. The board and samples were then removed from the oven and a 2kg roller was applied on the sample. The samples were left for three days at room temperature and the two pieces of paper were peeled apart to expose the adhesive strip. 100% of adhesion is obtained if the adhesive strip is entirely covered by remaining paper (average of 3 measurements). The paper stock was 130gsm cross-grain, coated and printed.

Preparation of TPU

Polyester polyols and Irganox 1010 were weighed into a glass flask and heated to 120°C with mechanical stirring. The flask was sealed and vacuum was applied for 1 hour (pressure 2-5 mbar) via a vacuum pump to remove water. Flake MDI was added and allowed to react with the hydroxyl groups at 130°C. The reaction was followed by infrared spectroscopy until the NCO absorption at 2200 cm$^{-1}$ disappeared.

Polymer blend and formulation

TPU polymer A and TPU polymer B are weighed into a glass flange flask and preheated for 30 minutes at 160 °C. The polymers are then mixed using an overhead stirrer at 140 °C for 15 minutes. Vacuum (pressure 2 to 5 mbar) is then applied for 15 minutes to remove air, keeping the temperature at 140 °C.

TPU 1, Sheenthane® AH-780SL, Taiwan Sheen Soon, $M_n$ = 36,600 g per mole

Polyester A1, copolymer of hexane diol and adipic acid, $M_n$ = 4065 g/mol, Tm = 55 °C

Polyester A2, copolymer of hexane diol, adipic acid and terephthalic acid $M_n$ = 1460 g/ mol, Tm = 124 °C

Polyester B1, copolymer of diethylene glycol, adipic acid and isophthalic acid $M_n$ = 1965 g/ mol, $T_g$ = -25 °C

Polyester B2, copolymer of ethylene glycol, neopentyl glycol, sebacic acid and isophthalic acid, $M_n$ = 1875 g per mole, Tg = -25 °C

Polyester B3, copolymer of diethylene glycol and phthalic anhydride, $M_n$ = 578 g per mole

Polyester B4, copolymer of diethylene glycol, adipic acid and isophthalic acid $M_n$ = 2005 g per mole, $T_g$ = -25 °C

4,4' MDI (polyisocyanate)

Irganox 1010 (antioxidant)

In the following percentages are in wt.% unless explicitly stated otherwise.

| TPU 2 | NCO/OH 0.77 | $M_n$ = 11,150 g per mole |
|---|---|---|
| A1 | 25.2% | |
| B1 | 30.1% | |
| B3 | 30.1% | |
| MDI | 14.2% | |
| Irganox 1010 | 0.5% | |

Blend 1 = 80/20 TPU 2 / TPU 1
Blend 2 = 60/40 TPU 2 / TPU 1

| | Blend 1 | Blend 2 | TPU 1 (alone; comparative) |
|---|---|---|---|
| Melt viscosity (mPas at 160 °C) | 7,250 | 15,340 | 83,870 |
| Open time (s) | >180 | 30 | 10 |
| Adhesion (%) | 100 | 100 | 33.33 |

| TPU 3 | NCO/OH 0.77 Mn = 11,350 g/mol |
|---|---|
| A2 | 20.8% |

(continued)

| | |
|---|---|
| TPU 3 | NCO/OH 0.77 Mn = 11,350 g/mol |
| B2 | 20.8% |
| B3 | 31.3% |
| B4 | 10.5% |
| MDI | 16.1% |
| Irganox 1010 | 0.5% |

Blend 3 = 60/40 TPU 3 / TPU C2

| | Blend 3 | TPU 1 (alone; comparative) |
|---|---|---|
| Melt viscosity (mPa.s at 160 °C) | 21,000 | 83,870 |
| Open time (s) | 180 | 10 |
| Adhesion (%) | 99.5 | 33.33 |

**Claims**

1. A hot melt adhesive composition comprising two thermoplastic polyurethane copolymers (A) and (B), wherein the thermoplastic polyurethane copolymer (A) comprises a reaction product of
   at least one polyester polyol; and
   at least one polyisocyanate; and
   has a number average molecular weight ($M_n$) of at least 25,000 g/mol;
   wherein the thermoplastic polyurethane copolymer (B) comprises a reaction product of
   at least one polyester polyol; and
   at least one polyisocyanate; and
   has a number average molecular weight ($M_n$) of less than 25,000 g/mol; and
   wherein the hot melt adhesive composition has a melt viscosity of 1,000 to 100,000 mPas at 160 °C.

2. The hot melt adhesive composition according to claim 1, wherein the weight ratio of (A) to (B) is 5:95 to 95:5.

3. The hot melt adhesive composition according to claim 1 or 2, wherein (A) has a number average molecular weight ($M_n$) of at least 30,000 g/mol, preferably at least 35,000 g/mol.

4. The hot melt adhesive composition according to any one of claims 1 to 3, wherein (B) has a number average molecular weight ($M_n$) of less than 20,000 g/mol, preferably less than 15,000 g/mol.

5. The hot melt adhesive composition according to any one of claims 1 to 4, wherein the hot melt adhesive composition further comprises 0.1 to 50 wt.-% of additives based on the total weight of the hot melt adhesive composition, and wherein the additives are preferably selected from stabilizers, adhesion promoters, plasticizers, tackifiers, fillers, thermoplastic polymers, which are different from (A) and (B), and combinations thereof.

6. The hot melt adhesive composition according to any of claims 1 to 5, wherein the hot melt adhesive composition comprises, based on the total weight of the composition:

   50 to 93.5 wt.-% of the two thermoplastic polyurethane copolymers (A) and (B);
   0.5 to 5 wt.-% of at least one stabilizer;
   1 to 20 wt.-% of at least one plasticizer;
   5 to 45 wt.-% of at least one tackifier;
   up to 43.5 wt.-% of at least one thermoplastic polymer, which is different from (A) and (B).

7. The hot melt adhesive composition according to any one of claims 1 to 6, wherein at least one polyester polyol of the thermoplastic polyurethane copolymer (A) and/or (B) comprises an ortho-phthalate.

8. The hot melt adhesive composition according to claim 7, wherein the ortho-phthalate is comprised in at least one polyester polyol of the thermoplastic polyurethane copolymer (B).

9. The hot melt adhesive composition according any of claims 1 to 8, wherein
   the at least one polyester polyol of the thermoplastic polyurethane copolymer (A) and/or (B) comprises

   a) at least one semi-crystalline polyester polyol having a melting point ($T_m$) of from 40 to 150 °C; and
   b) at least one non-crystalline polyester polyol.

10. The hot melt adhesive composition according to claim 9, wherein
    the at least one non-crystalline polyester polyol b) comprises

    c) a non-crystalline polyester polyol having a number average molecular weight ($M_n$) of less than 750 g/mol; and
    d) a non-crystalline polyester polyol having a number average molecular weight ($M_n$) of at least 750 g/mol.

11. The hot melt adhesive composition according to claim 9, wherein the ortho-phthalate is contained in the polyester polyol compound b).

12. The hot melt adhesive composition according to claim 10, wherein the ortho-phthalate is contained in the polyester polyol compound c).

13. The hot melt adhesive composition according to any one of claims 5 to 12, wherein the at least one thermoplastic polymer, which is different from (A) and (B), is selected from EVA, rubber type polymers, styrene copolymers, polyester copolymers, polycarbonates, polyamides, acrylics and thermoplastic polyurethanes or combinations thereof.

14. A method of applying a hot melt adhesive composition according to any one of claims 1 to 13 to a substrate, comprising the steps

    1) melting the hot melt adhesive composition in a heated container without agitation or shear;
    2) pumping the melted hot melt adhesive composition of step 1) via a gear or piston pump through a heated hose; and
    3) applying the hot melt adhesive composition via a nozzle, roller or spray head onto the substrate.

15. Use of the hot melt adhesive composition according to any one of claims 1 to 13 in bookbinding, wood bonding, flat lamination, flexible packaging, profile wrapping, edge banding, textile lamination, low pressure molding, and shoes.


**Patentansprüche**

1. Schmelzklebstoffzusammensetzung, umfassend zwei thermoplastische Polyurethancopolymere (A) und (B), wobei das thermoplastische Polyurethancopolymer (A) ein Umsetzungsprodukt umfasst aus:

   mindestens einem Polyesterpolyol und
   mindestens einem Polyisocyanat; und
   ein zahlenmittleres Molekulargewicht ($M_n$) von mindestens 25.000 g/mol aufweist;
   wobei das thermoplastische Polyurethancopolymer (B) ein Umsetzungsprodukt umfasst aus:
   mindestens einem Polyesterpolyol und
   mindestens einem Polyisocyanat; und
   ein zahlenmittleres Molekulargewicht ($M_n$) von weniger als 25.000 g/mol aufweist; und
   wobei die Schmelzklebstoffzusammensetzung eine Schmelzviskosität von 1.000 bis 100.000 mPas bei 160 °C aufweist.

2. Schmelzklebstoffzusammensetzung nach Anspruch 1, wobei das Gewichtsverhältnis von (A) zu (B) 5:95 bis 95:5 ist.

3. Schmelzklebstoffzusammensetzung nach Anspruch 1 oder 2, wobei (A) ein zahlenmittleres Molekulargewicht ($M_n$) von mindestens 30.000 g/mol, bevorzugt von mindestens 35.000 g/mol aufweist.

4. Schmelzklebstoffzusammensetzung nach einem der Ansprüche 1 bis 3, wobei (B) ein zahlenmittleres Molekular-

gewicht ($M_n$) von weniger als 20.000 g/mol, bevorzugt von weniger als 15.000 g/mol aufweist.

5. Schmelzklebstoffzusammensetzung nach einem der Ansprüche 1 bis 4, wobei die Schmelzklebstoffzusammensetzung ferner 0,1 bis 50 Gew.-% an Zusätzen bezogen auf das Gesamtgewicht der Schmelzklebstoffzusammensetzung umfasst, und wobei die Zusätze bevorzugt ausgewählt sind aus Stabilisatoren, Haftvermittlern, Weichmachern, Klebrigmachern, Füllstoffen, thermoplastischen Polymeren, die sich von (A) und (B) unterscheiden, und Kombinationen daraus.

6. Schmelzklebstoffzusammensetzung nach einem der Ansprüche 1 bis 5, wobei die Schmelzklebstoffzusammensetzung bezogen auf das Gesamtgewicht der Zusammensetzung umfasst:

50 bis 93,5 Gew.-% der zwei thermoplastischen Polyurethancopolymere (A) und (B);
0,5 bis 5 Gew.-% mindestens eines Stabilisators;
1 bis 20 Gew.-% mindestens eines Weichmachers;
5 bis 45 Gew.-% mindestens eines Klebrigmachers;
bis zu 43,5 Gew.-% mindestens eines thermoplastischen Polymers, das sich von (A) und (B) unterscheidet.

7. Schmelzklebstoffzusammensetzung nach einem der Ansprüche 1 bis 6, wobei mindestens ein Polyesterpolyol des thermoplastischen Polyurethancopolymers (A) und/oder (B) ein Orthophthalat umfasst.

8. Schmelzklebstoffzusammensetzung nach Anspruch 7, wobei das Orthophthalat in mindestens einem Polyesterpolyol des thermoplastischen Polyurethancopolymers (B) enthalten ist.

9. Schmelzklebstoffzusammensetzung nach einem der Ansprüche 1 bis 8, wobei das mindestens eine Polyesterpolyol des thermoplastischen Polyurethancopolymers (A) und/oder (B) umfasst:

a) mindestens ein semikristallines Polyesterpolyol mit einem Schmelzpunkt ($T_m$) von 40 bis 150 °C; und
b) mindestens ein nichtkristallines Polyesterpolyol.

10. Schmelzklebstoffzusammensetzung nach Anspruch 9, wobei das mindestens eine nichtkristalline Polyesterpolyol b) umfasst:

c) ein nichtkristallines Polyesterpolyol mit einem zahlenmittleren Molekulargewicht ($M_n$) von weniger als 750 g/mol; und
d) ein nichtkristallines Polyesterpolyol mit einem zahlenmittleren Molekulargewicht ($M_n$) von mindestens 750 g/mol.

11. Schmelzklebstoffzusammensetzung nach Anspruch 9, wobei das Orthophthalat in der Polyesterpolyolverbindung b) enthalten ist.

12. Schmelzklebstoffzusammensetzung nach Anspruch 10, wobei das Orthophthalat in der Polyesterpolyolverbindung c) enthalten ist.

13. Schmelzklebstoffzusammensetzung nach einem der Ansprüche 5 bis 12, wobei das mindestens eine thermoplastische Polymer, das sich von (A) und (B) unterscheidet, ausgewählt ist aus EVA, gummiartigen Polymeren, Styrolcopolymeren, Polyestercopolymeren, Polycarbonaten, Polyamiden, Acrylharzen und thermoplastischen Polyurethanen oder Kombinationen davon.

14. Verfahren zum Auftragen einer Schmelzklebstoffzusammensetzung nach einem der Ansprüche 1 bis 13 auf ein Substrat, die Schritte umfassend:

1) Schmelzen der Schmelzklebstoffzusammensetzung in einem erhitzten Behälter ohne Rühren oder Scheren;
2) Pumpen der geschmolzenen Schmelzklebstoffzusammensetzung aus Schritt 1) über eine Zahnrad- oder eine Kolbenpumpe durch einen erhitzten Schlauch; und
3) Auftragen der Schmelzklebstoffzusammensetzung über eine Düse, eine Walze oder einen Sprühkopf auf das Substrat.

15. Verwendung der Schmelzklebstoffzusammensetzung nach einem der Ansprüche 1 bis 13 bei Buchbinden, Verkleben von Holz, Flachkaschierung, flexiblem Verpacken, Profilumhüllen, Kantenleimen, Textilkaschierung, Niederdruckgießen und Schuhen.

**Revendications**

1. Composition adhésive thermofusible comprenant deux copolymères de polyuréthane thermoplastique (A) et (B), dans laquelle le copolymère de polyuréthane thermoplastique (A) comprend un produit de réaction d'au moins un polyester-polyol ; et
au moins un polyisocyanate ; et
a une masse moléculaire moyenne en nombre ($M_n$) d'au moins 25 000 g/mol ;
dans laquelle le copolymère de polyuréthane thermoplastique (B) comprend un produit de réaction d'au moins un polyester-polyol ; et
au moins un polyisocyanate ; et
a une masse moléculaire moyenne en nombre ($M_n$) inférieure à 25 000 g/mol ; et
dans laquelle la composition adhésive thermofusible a une viscosité à l'état fondu de 1 000 à 100 000 mPa.s à 160 °C.

2. Composition adhésive thermofusible selon la revendication 1, dans laquelle le rapport pondéral entre (A) et (B) est de 5:95 à 95:5.

3. Composition adhésive thermofusible selon la revendication 1 ou 2, dans laquelle (A) a une masse moléculaire moyenne en nombre ($M_n$) d'au moins 30 000 g/mol, de préférence d'au moins 35 000 g/mol.

4. Composition adhésive thermofusible selon l'une quelconque des revendications 1 à 3, dans laquelle (B) a une masse moléculaire moyenne en nombre ($M_n$) inférieure à 20 000 g/mol, de préférence inférieure à 15 000 g/mol.

5. Composition adhésive thermofusible selon l'une quelconque des revendications 1 à 4, la composition adhésive thermofusible comprenant en outre de 0,1 à 50 % en poids d'additifs sur la base du poids total de la composition adhésive thermofusible, et dans laquelle les additifs sont de préférence choisis parmi des stabilisants, des promoteurs d'adhésion, des plastifiants, des agents poisseux, des charges, des polymères thermoplastiques, qui sont différents de (A) et (B), et des combinaisons de ceux-ci.

6. Composition adhésive thermofusible selon l'une quelconque des revendications 1 à 5, la composition adhésive thermofusible comprenant, sur la base du poids total de la composition :

   de 50 à 93,5 % en poids des deux copolymères de polyuréthane thermoplastique (A) et (B) ;
   de 0,5 à 5 % en poids d'au moins un stabilisant ;
   de 1 à 20 % en poids d'au moins un plastifiant ;
   de 5 à 45 % en poids d'au moins un agent poisseux ;
   jusqu'à 43,5 % en poids d'au moins un polymère thermoplastique, qui est différent de (A) et (B).

7. Composition adhésive thermofusible selon l'une quelconque des revendications 1 à 6, dans laquelle au moins un polyester-polyol du copolymère de polyuréthane thermoplastique (A) et/ou (B) comprend un orthophtalate.

8. Composition adhésive thermofusible selon la revendication 7, dans laquelle l'orthophtalate est contenu dans au moins un polyester-polyol du copolymère de polyuréthane thermoplastique (B).

9. Composition adhésive thermofusible selon l'une quelconque des revendications 1 à 8, dans laquelle l'au moins un polyester-polyol du copolymère de polyuréthane thermoplastique (A) et/ou (B) comprend

   a) au moins un polyester-polyol semi-cristallin ayant un point de fusion ($T_m$) compris entre 40 et 150°C ; et
   b) au moins un polyester-polyol non cristallin.

10. Composition adhésive thermofusible selon la revendication 9, dans laquelle l'au moins un polyester-polyol non cristallin b) comprend

    c) un polyester-polyol non cristallin ayant une masse moléculaire moyenne en nombre ($M_n$) inférieure à 750 g/mol ; et

d) un polyester-polyol non cristallin ayant une masse moléculaire moyenne en nombre ($M_n$) d'au moins 750 g/mol.

11. Composition adhésive thermofusible selon la revendication 9, dans laquelle l'orthophtalate est contenu dans le composé de polyester-polyol b).

12. Composition adhésive thermofusible selon la revendication 10, dans laquelle l'orthophtalate est contenu dans le composé de polyester-polyol c).

13. Composition adhésive thermofusible selon l'une quelconque des revendications 5 à 12, dans laquelle l'au moins un polymère thermoplastique, qui est différent de (A) et (B), est choisi parmi l'EVA, des polymères de type caoutchouc, des copolymères de styrène, des copolymères de polyester, des polycarbonates, des polyamides, des acryliques et des polyuréthanes thermoplastiques ou leurs combinaisons.

14. Procédé d'application d'une composition adhésive thermofusible selon l'une quelconque des revendications 1 à 13 à un substrat, comprenant les étapes suivantes

1) faire fondre la composition adhésive thermofusible dans un contenant chauffé sans agitation ni cisaillement ;
2) pomper la composition adhésive thermofusible fondue de l'étape 1) au moyen d'une pompe à engrenages ou à piston à travers un tuyau chauffé ; et
3) appliquer la composition adhésive thermofusible par l'intermédiaire d'une buse, d'un rouleau ou d'une tête de pulvérisation sur le substrat.

15. Utilisation de la composition adhésive thermofusible selon l'une quelconque des revendications 1 à 13 pour la reliure, le collage de bois, le laminage à plat, l'emballage souple, l'emballage de profil, le placage de chant, le laminage textile, le moulage à basse pression et les chaussures.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0015728 A

**Non-patent literature cited in the description**

- The Polyurethanes Handbook. John Wiley and Sons, 2002